# EUROPÄISCHE PATENTSCHRIFT

(11) **EP 2 681 505 B1**
(45) Veröffentlichungstag und Bekanntmachung des Hinweises auf die Patenterteilung: **07.01.2015**
(21) Anmeldenummer: 12709774.9
(22) Anmeldetag: 13.02.2012
(51) Int. Cl.: G01B 3/10, G01B 5/004, G01B 7/004

(54) **VORRICHTUNG ZUM MESSEN VON FLÄCHENMAßEN EINES OBJEKTES**
DEVICE FOR MEASURING SURFACE DIMENSIONS OF AN OBJECT
DISPOSITIF DE MESURE DES DIMENSIONS SURFACIQUES D'UN OBJET

(30) Priorität: 01.03.2011 AT 2702011
(43) Veröffentlichungstag der Anmeldung: 08.01.2014
(73) Patentinhaber: Puchegger u. Jilg Parkett Groß u. Einzelhandels Ges.m.b.H., 2851 Krumbach (AT)
(72) Erfinder: PUCHEGGER, Alfred, A-2851 Krumbach (AT)
(74) Vertreter: Holzer, Walter
(86) Internationale Anmeldenummer: PCT/AT2012/000026
(87) Internationale Veröffentlichungsnummer: WO 2012/116381

(56) Entgegenhaltungen:
- US-A- 4 500 749
- US-A- 5 004 870
- US-A- 5 782 007
- US-A1- 2009 056 159

## Beschreibung

Die Erfindung betrifft eine Vorrichtung zum Messen von Flächenmaßen eines Objektes, mit einem abrollbar auf einer Rolle gelagerten, länglichen flexiblen Materialstück, an dessen Ende eine Sonde vorgesehen ist, wobei zwei Sensoren vorgesehen sind, durch welche die abgerollte Strecke des Materialstückes und der Winkel des Materialstückes bezüglich der Basis erfaßbar sind, und wobei die Basis aus einer flächigen Bodenplatte besteht und die Rolle auf der von der Auflagefläche der Bodenplatte abgewandten Seite angeordnet ist. Die Erfindung betrifft ferner ein Verfahren zum Herstellen eines Stiegenstufenbelages.

Die EP 2 157 401 A1 zeigt eine Vorrichtung zum Messen der Ausdehnung von Objekten in drei Raumdimensionen. Dabei werden die Umrisse des Objektes mit einer von Hand geführten Sonde abgetastet. Die Sonde ist über ein unter Spannung gehaltenes Seil mit einem Basisgerät verbunden, welches die Länge des abgerollten Seiles sowie den Winkel des Seiles relativ zum Basisgerät messen kann. Die Seilrolle befindet sich im Basisgerät und verläßt dieses über ein Kugelgelenk. Sensoren am Kugelgelenk messen dessen aktuelle Ausrichtung in zwei Freiheitsgraden. Aus den drei gewonnenen Daten wird elektronisch eine Raumkoordinate errechnet. Diese Vorrichtung ist auch dazu geeignet, in zwei Raumdimensionen zu messen, allerdings ist die Mechanik des Kugelgelenkes aufwendig ausgeführt, um Meßfehler zu minimieren. Der Nachteil ist, daß sich der konstruktive Aufwand für das Vermessen nur zweidimensionaler Objekte nicht lohnt.

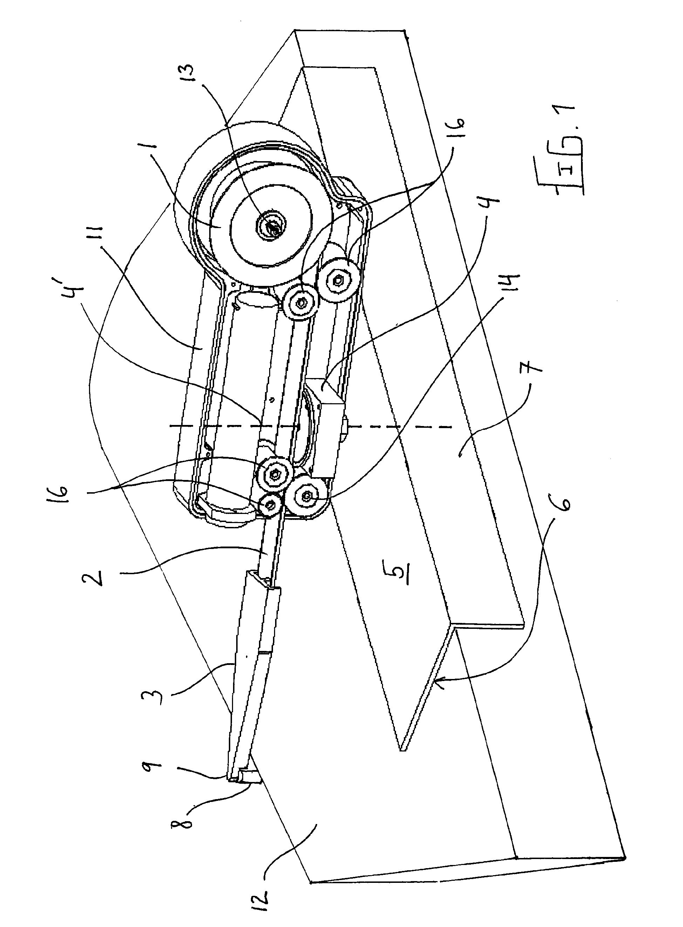

Die US 6,785,973 B1 offenbart eine Vorrichtung zum Messen der Ausdehnung von zweidimensionalen Objekten, wobei bei der bekannten Vorrichtung ein Kugelgelenk durch ein einfaches, in einer Hochachse liegendes Drehgelenk ersetzt ist. Über einen Ausleger wird ein Seil mit einer Sonde herausgeführt. Somit kann nur noch ein Winkel der Sonde zur Vorrichtung bestimmt werden (siehe Fig. 1 der US 6,785,973 B1). Nachteil dieser Lösung ist, daß die Ebene, in der sich der Ausleger befindet, von der zu vermessenden Objektfläche entfernt liegt. Steht beispielsweise die Vorrichtung auf der zu vermessenden Objektfläche, so muß die Sonde auf diese Fläche heruntergeführt werden, was zwar durch die Biegsamkeit des Seiles möglich ist, aber zu einem Meßfehler führen kann.

Die US 2009/0056159 lehrt ein Instrument zum Vervielfachen komplexer Formen, bei welchem ein erstreckbares Maßband an einem Ende drehbar mit einer Basis verbunden ist und an dem zweiten Ende eine Sonde aufweist, die den Umriß einer komplexen Form per Hand geführt abfahren kann. Nachteilig ist bei dieser Lehre, daß das erstreckbare Maßband beim Entfalten und Zusammenziehen ohne weitere Vorkehrungen ein unregelmäßiges Verhalten zeigt, welches zu Meßungenauigkeiten führt.

Die US 5,004,870 zeigt einen Polarkoordinaten-Digitalisierer, bei welchem eine Schnur an einem Ende drehbar mit einer Basis verbunden ist und an dem zweiten Ende eine Sonde aufweist, die den Umriß einer komplexen Form per Hand geführt abfahren kann. Nachteilig ist hier, daß die Schnur nicht mit einer Skala versehen werden kann, um bei Verwendung des Geräts eine optische Kontrolle für den Anwender zu ermöglichen.

Die US 4,500,749 offenbart einen Digitalisierer in Form eines Meßtisches zur Kodierung geometrischer Formen. Nachteilig ist hier, daß die zu vermessenden Objekte kleiner als der Meßtisch sein müssen.

Die US 5,782,007 lehrt ein Bandmaß, das zu einer Werkzeugführung umgebaut ist. Dabei wird am freien Ende eines abrollbaren Maßbandes ein Körper befestigt, in den ein Messer oder ein Zeichengerät einsetzbar sind. Das Maßband ist schwenkbar auf einer Basis angeordnet. Es können so auf einfache Weise z.B. Kreissegmente aus einem Papierbogen geschnitten oder auf einen solchen gezeichnet werden.

Die Erfindung zielt darauf ab, eine Vorrichtung der einleitend angegebenen Art zu schaffen, welche es gestattet, Flächen mit geringem Fehler zu vermessen und welche einfach und robust sowie kostengünstig konstruiert ist. Die erfindungsgemäße Vorrichtung zeichnet sich dadurch aus, daß die Rolle um eine Hochachse, die sowohl senkrecht zu der Ebene einer Basis der Vorrichtung als auch senkrecht zur Rotationsachse der Rolle steht, drehbar mit der Basis der Vorrichtung verbunden ist, und daß die Rolle auf einem Schwenkarm gelagert ist, durch welchen die Achse der Rolle wiederholbar in Richtung zur Basis bewegbar ist.

Das erfindungsgemäße Verfahren umfaßt die Schritte: Vermessen der Flächenabmessungen der Stiegenstufe mittels einer Vorrichtung gemäß der Erfindung; Übermitteln der Daten der Flächenabmessung an eine Verarbeitungseinheit und Anfertigen des Stiegenstufenbelages gemäß der übermittelten Daten.

Eine bevorzugte Ausführungsform der Vorrichtung zeichnet sich dadurch aus, daß ein Vorspannmittel, vorzugsweise eine Feder, vorgesehen ist, welche auf das längliche flexible Materialstück eine Kraft zum Aufrollen auf die Rolle ausübt.

In einer Ausführungsform der Erfindung ist das längliche flexible Materialstück ein Maßband.

Zur weiteren Ausgestaltung der Erfindung weist die Bodenplatte eine Anschlagkante zum Ausrichten der Vorrichtung an einer Objektkante auf.

Bei einer anderen Ausgestaltung der Erfindung ist die Sonde als Handstück ausgebildet, wobei die Sonde vorzugsweise eine Spitze aufweist. Dabei kann Spitze der Sonde als kugelgelagerte Abtastrolle ausgebildet sein, deren Rollenachse parallel zur Hochachse der Vorrichtung verläuft.

In einer weiteren Ausführungsform der Erfindung verläuft die Hochachse durch einen lösbar, vorzugsweise magnetisch, mit der Bodenplatte verbundenen Lagerblock.

Gemäß einer weiteren Ausgestaltung der Erfindung ist mindestens einer der Sensoren ein magnetischer Sensor.

Bevorzugt ist die Vorrichtung gemäß der Erfindung durch eine Fernbedienung steuerbar.

Weiterhin wird bevorzugt, daß die Vorrichtung ein Sendemittel, vorzugsweise ein elektronisches Sendemittel, insbesondere einen Bluetooth-Sender, aufweist, mit welchem die Meßwerte an eine Verarbeitungseinheit übermittelbar sind.

Die Erfindung betrifft auch ein System zum Messen von Flächenmaßen eines Objektes, umfassend eine Vorrichtung gemäß der Erfindung und einen Computer, wobei eine Kommunikationsverbindung zwischen Vorrichtung und Computer errichtbar ist.

Die Erfindung zielt auch darauf ab, ein Verfahren zum Herstellen eines Stiegenstufenbelages zu schaffen. Es soll auf schnelle und einfache Weise erlauben, die Beläge für Stiegenstufen mit individuellen Oberflächenmaßen herzustellen.

Das erfindungsgemäße Verfahren erreicht dies durch die Schritte: Vermessen der Flächenabmessungen der Stiegenstufe mittels der erfindungsgemäßen Vorrichtung; Übermitteln der Daten der Flächenabmessung an eine Verarbeitungseinheit; Anfertigen des Stiegenstufenbelages gemäß der übermittelten Daten.

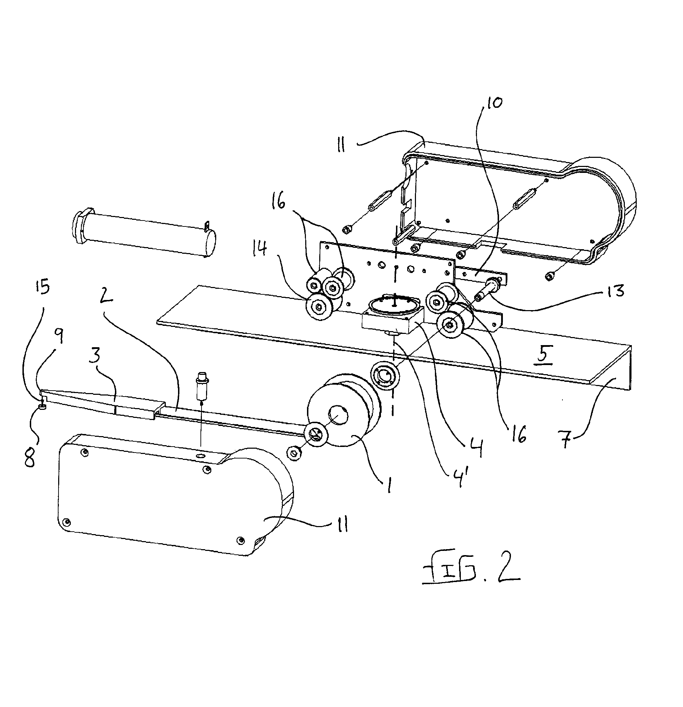

Die Erfindung wird nachstehend anhand eines in den Zeichnungen dargestellten Ausführungsbeispieles näher erläutert. Es zeigen: Fig. 1 ein perspektivische Gesamtansicht der Vorrichtung auf einem zu vermessenden Werkstück, Fig. 2 eine gesprengte Darstellung der Bauteile der Vorrichtung.

Die Vorrichtung zum Messen von Flächenmaßen eines Objektes wird gemäß Fig. 1 mit der Basis 5 auf eine zu vermessende Oberfläche des Objektes 12 gelegt. Die Oberfläche kann eine beliebig geformte Platte oder Fläche eines beliebigen Gegenstandes ausreichender Steifigkeit sein. Das Objekt 12 kann einen Kantenumriß aufweisen, eine aufgezeichnete, zu erfassende Linie oder gar keine Formvorgabe. Die Meßgenauigkeit wird allerdings erhöht, wenn die Oberfläche wenige Unebenheiten aufweist. Im folgenden wird der Meßvorgang anhand des Beispieles eines plattenförmigen Objektes 12 mit einem Kantenumriß geschildert, wie es in Fig. 1 dargestellt ist.

Auf der Basis 5 befindet sich ein drehend gelagertes Gehäuse 11, in dem sich eine Rolle 1 mit einem abrollbar aufgewickelten flexiblen Materialstück 2 befindet. An dem außerhalb des Gehäuses 11 befindlichen Ende des Materialstückes 2 befindet sich eine Sonde 3, die zum Beispiel mit der Hand von dem Gehäuse 11 weg gezogen werden kann, wobei sich das Materialstück 2 von der Rolle 1 abrollt. Nähert sich die Sonde 3 wieder dem Gehäuse 11, so wird das Materialstück durch ein Vorspannmittel auf die Rolle 1 aufgerollt. Die maximal ausrollbare Länge des Materialstückes kann beispielsweise zwei Meter oder mehr betragen. Ein System aus Rolle 1, Materialstück 2, Sonde 3 und dem Vorspannmittel ist beispielsweise bei herkömmlichen Metallmaßbändern bekannt.

Die Rolle 1 ist über das Gehäuse 11 drehbar auf der Basis 5 angeordnet. Die Drehung erfolgt über eine Hochachse 4' eines Lagerblockes 4, welche bei Vermessung der Oberfläche möglichst senkrecht auf der Basis 5 und der Oberfläche steht. In dem in Fig. 1 gezeigten Beispiel besteht die Hochachse 4' aus einem in einem Quader angeordneten Lager, welches mit dem Gehäuse 11 fest verbindbar ist.

Wird nun die Sonde 3 entlang eines beliebigen Umrisses der Oberfläche des Objektes 12 geführt, dreht sich die Rolle 1 um die Hochachse 4' immer derart mit, daß eine gerade Verbindung zwischen der Sonde 3 und der Rolle 1 besteht; zudem rollt sich das Materialstück 2 immer soweit von der Rolle 1 ab oder auf sie auf, wobei es straff zwischen Sonde 3 und Rolle 1 gespannt ist. Beim Abfahren des Oberflächenumrisses mit der Sonde 3 werden also zwei Koordinaten erzeugt: der Winkel der Rolle 1 bzw. des Gehäuses 11 relativ zur Basis 5 und die abgerollte Strecke des Materialstückes 2 in Abhängigkeit des Winkels. Diese beiden Koordinaten werden durch Sensoren im Gehäuse 11 elektronisch erfaßt und können von einem Computer in einen Oberflächenplan umgerechnet werden. Ohne großen Aufwand, wie etwa ein händisches Vermessen, werden Abmessungen schiefer Winkel oder individuelle Krümmungen in der Oberflächenebene erfaßt. Mit dem Abfahren des Umrisses und der Berechnung der erzeugten Daten ist die Vermessung abgeschlossen.

Erfindungsgemäß liegt die Achse 13 der Rolle 1 senkrecht zur Hochachse 4', damit keine veränderlichen schiefen Winkel beim Abrollen des Materialstückes 2 entstehen, die die Meßgenauigkeit beeinträchtigen würden. Bei der in Fig. 1 gezeigten Ausführungsform gilt dies ebenso für die Achse der Führungsrolle 14, da die Führungsrolle 14 bestimmt, mit welcher Ausrichtung das Materialstück 2 das Gehäuse 11 verläßt.

Fig. 2 zeigt die Teile einer alternativen Ausführungsform der Vorrichtung in gesprengter Darstellung. Die Rolle 1 ist hier auf einem Schwenkarm 10 gelagert. Dadurch ist die Achse 13 der Rolle 1 absenkbar. Dies trägt dem Umstand Rechnung, daß das Materialstück 2 bei zunehmender abgerollter Strecke stärker vom Zentrum der Rolle 1 her als von ihrem Umfang zur Führungsrolle 14 gelangt. Selbst den vorgesehenen weiteren Zentrierrollen 16 würde das Materialstück 2 aus einem veränderlichen Winkel von der Rolle 1 zugeführt werden, sofern diese Rolle sich nicht mit zunehmend abgerollter Strecke in Richtung zur Basis bewegt. Wird das Materialstück 2 während oder nach der Messung wieder freigegeben, rollt es sich wieder auf die Rolle 1 auf, die dann auf dem Schwenkarm 10 wieder nach oben, d.h. in Richtung von der Basis weg, fährt. Entsprechend mehr Freiraum für die sich bewegende Rolle 1 ist bei dieser Ausführungsform in dem Gehäuse 11 zu belassen.

Zur Erleichterung der Handhabung und zur Steigerung der Meßgenauigkeit weist die Sondenspitze 9 eine Abtastrolle 8 auf. Dadurch kann die Sonde 3 abrollbar auf den Umriß des Objektes 12 gedrückt werden. Meßungenauigkeiten durch eine verrutschende Sonde 3 werden somit eliminiert. Die Drehachse 15 der Abtastrolle 8 verläuft zur weiteren Steigerung der Meßgenauigkeit parallel zur Hochachse 4'.

Zusätzlich kann die Basis 5 eine Anschlagkante 7 aufweisen. Dies führt zu einem festeren Sitz der Basis bei der Vermessung von Objekten, die mindestens eine ausreichend lange gerade Kante aufweisen. Solche Objekte können beispielsweise Stiegenstufen sein, die nach Einbau in das Stiegenhaus jeweils ein individuelles Maß aufweisen, gleichzeitig aber auch eine gerade Stiegenkante. Ein fester Sitz der Basis 5 ist Voraussetzung für eine genaue Messung.

Die elektronischen Sensoren innerhalb des Gehäuses 11 messen den Winkel des Gehäuses 11 relativ zur Basis sowie die abgerollte Strecke des Materialstückes 2. Aus dem Stand der Technik sind Sensoren, wie etwa magnetische Sensoren, bekannt, die ohne mechanischen Aufwand elektrische Signale erzeugen, die elektronisch weiterzuverarbeiten sind.

Die Meßwerte können über eine Funkverbindung an einen außenstehenden Empfänger gesendet werden. Dieser Empfänger kann ein Computer sein, der aus dem zeitlichen Verlauf der Meßwerte-Paare (Winkel des Gehäuses 11 und abgerollte Strecke des Materialstückes 2) einen Umrißplan des Objektes 12 berechnet. Für die Funkverbindung können übliche Verfahren, wie etwa Bluetooth, Infrarot od.dgl., verwendet werden.

Eine Funkverbindung mit der Vorrichtung kann auch dazu genutzt werden, um sie fernzusteuern. Durch die Fernsteuerung können beispielsweise der zeitliche Meßanfang und das Meßende ausgelöst werden.

Um die Handhabung und die Meßgenauigkeit zu steigern, können problematische Stellen eines Objektumrisses mehrmals hintereinander mit der Sonde 3 abgefahren werden. Das Auswerteprogramm erhält dann für einen entsprechenden Winkelbereich mehrere Abrollängen des Materialstückes 2 und kann dazu einen Mittelwert berechnen, oder - je nach Erfordernis - den Maximal- oder Minimalwert.

Um den Transport der Vorrichtung zu erleichtern, ist das Gehäuse 11 von der Basis 5 abnehmbar. Die Abnehmbarkeit kann beispielsweise dadurch erzielt werden, daß der die Hochachse 4' enthaltende Lagerblock 4 magnetisch auf der Basis 5 haftet. Der Lagerblock 4 ist dann während der Messung fest mit der Basis 5 verbunden, kann aber nach der Messung durch Kippen des Gehäuses 11 leicht von der Basis 5 gelöst werden.

Es versteht sich, daß die geschilderten Ausführungsbeispiele im Rahmen des Erfindungsgedankens verschiedentlich abwandelbar sind, z.B. hinsichtlich des Materialstückes, das auch ein Stahlseil od.dgl. sein kann, sowie hinsichtlich des Vorspannmittels oder der Sensoren.

## Patentansprüche

1. Vorrichtung zum Messen von Flächenmaßen eines Objektes (12), mit einem abrollbar auf einer Rolle (1) gelagerten, länglichen flexiblen Materialstück (2), an dessen Ende eine Sonde (3) vorgesehen ist, wobei zwei Sensoren vorgesehen sind, durch welche die abgerollte Strecke des Materialstückes (2) und der Winkel des Materialstückes (2) bezüglich einer Basis (5) der Vorrichtung erfaßbar sind, und wobei die Basis (5) aus einer flächigen Bodenplatte besteht und die Rolle (1) auf der von der Auflagefläche (6) der Bodenplatte abgewandten Seite angeordnet ist, **dadurch gekennzeichnet, daß** die Rolle (1) um eine Hochachse (4'), die sowohl senkrecht zu der Ebene der Basis (5) der Vorrichtung als auch senkrecht zur Rotationsachse (13) der Rolle (1) steht, drehbar mit der Basis (5) der Vorrichtung verbunden ist, und daß die Rolle (1) auf einem Schwenkarm (10) gelagert ist, durch welchen die Achse (13) der Rolle (1) wiederholbar in Richtung zur Basis (5) bewegbar ist.

2. Vorrichtung nach Anspruch 1, **dadurch gekennzeichnet, daß** ein Vorspannmittel, vorzugsweise eine Feder, vorgesehen ist, mit welcher auf das längliche flexible Materialstück (2) eine Kraft zum Aufrollen auf die Rolle (1) ausübt.

3. Vorrichtung nach Anspruch 1 oder 2, **dadurch gekennzeichnet, daß** das längliche flexible Materialstück (2) ein Maßband ist.

4. Vorrichtung nach einem der Ansprüche 1 bis 3, **dadurch gekennzeichnet, daß** die Bodenplatte (5) eine Anschlagkante (7) zum Ausrichten der Vorrichtung an einer Objektkante aufweist.

5. Vorrichtung nach einem der Ansprüche 1 bis 4, **dadurch gekennzeichnet, daß** die Sonde (3) als Handstück ausgebildet ist.

6. Vorrichtung nach einem der Ansprüche 1 bis 5, **dadurch gekennzeichnet, daß** die Sonde (3) eine Spitze (9) aufweist.

7. Vorrichtung nach Anspruch 6, **dadurch gekennzeichnet, daß** die Spitze (9) der Sonde als kugelgelagerte Abtastrolle (8) ausgebildet ist, deren Rollenachse (15) parallel zur Hochachse (4') der Vorrichtung verläuft.

8. Vorrichtung nach einem der Ansprüche 1 bis 7, **dadurch gekennzeichnet, daß** die Hochachse (4') durch einen lösbar, vorzugsweise magnetisch, mit der Bodenplatte (5) verbundenen Lagerblock (4) verläuft.

9. Vorrichtung nach einem der Ansprüche 1 bis 8, **dadurch gekennzeichnet, daß** mindestens einer der Sensoren ein magnetischer Sensor ist.

10. Vorrichtung nach einem der Ansprüche 1 bis 9, **dadurch gekennzeichnet, daß** die Vorrichtung durch eine Fernbedienung steuerbar ist.

11. Vorrichtung nach einem der Ansprüche 1 bis 10, **dadurch gekennzeichnet, daß** die Vorrichtung ein Sendemittel, vorzugsweise ein elektronisches Sendemittel, insbesondere einen Bluetooth-Sender, aufweist, mit welchem die Meßwerte an eine Verarbeitungseinheit übermittelbar sind.

12. System zum Messen von Flächenmaßen eines Objektes, umfassend eine Vorrichtung nach einem der Ansprüche 1 bis 11 und einen Computer, wobei eine Kommunikationsverbindung zwischen Vorrichtung und Computer errichtbar ist.

13. Verfahren zum Herstellen eines Stiegenstufenbelages, umfassend die Schritte:
Vermessen der Flächenabmessungen der Stiegenstufe mittels einer Vorrichtung gemäß einem der Ansprüche 1 bis 12;
Übermitteln der Daten der Flächenabmessung an eine Verarbeitungseinheit;
Anfertigen des Stiegenstufenbelages gemäß der übermittelten Daten.

## Claims

1. Device for measuring the surface dimensions of an object (12), with a piece of elongated flexible material (2) which is borne on a roller (1) such that it can be unwound, and on the end of which a probe (3) is provided, wherein two sensors are provided, through which the unwound length of the piece of material (2) and the angle of the piece of material (2) relative to a base (5) of the device can be detected, and wherein the base (5) comprises a flat base plate and the roller (1) is arranged on the side facing away from the contact surface (6) of the base plate, **characterised in that** the roller (1) is connected to the base (5) of the device, such that it can be rotated around a vertical axis (4' ) which stands both perpendicular to the plane of the base (5) of the device and perpendicular to the axis of rotation (13) of the roller (1), and that the roller (1) is borne on a swivel arm (10), by means of which the axis (13) of the roller (1) can be repeatedly moved towards the base (5).

2. Device according to claim 1, **characterised in that** a pre-tensioning means is provided, preferably a spring, with which a force is exerted on the piece of elongated flexible material (2) for winding it onto the roller (1).

3. Device according to claim 1 or 2, **characterised in that** the piece of elongated flexible material (2) is a measuring tape.

4. Device according to one of the claims 1 to 3, **characterised in that** the base plate (5) has a stopping edge (7) for aligning the device to an edge of an object.

5. Device according to one of the claims 1 to 4, **characterised in that** the probe (3) is designed as a hand piece.

6. Device according to one of the claims 1 to 5, **characterised in that** the probe (3) has a pointed tip (9).

7. Device according to claim 6, **characterised in that** the pointed tip (9) of the probe is designed as a ball bearing-mounted scanning roller (8), the roller axis (15) of which runs parallel to the vertical axis (4') of the device.

8. Device according to one of the claims 1 to 7, **characterised in that** the vertical axis (4') runs through a detachable bearing block (4), preferably magnetic, which is connected to the base plate (5).

9. Device according to one of the claims 1 to 8, **characterised in that** at least one of the sensors is a magnetic sensor.

10. Device according to one of the claims 1 to 9, **characterised in that** the device can be controlled by means of a remote control.

11. Device according to one of the claims 1 to 10, **characterised in that** the device has a transmitting means, preferably an electronic transmitting means, in particular a Bluetooth transmitter, with which the measured values can be transmitted to a processing unit.

12. System for measuring the surface dimensions of an object, comprising a device according to one of the claims 1 to 11 and a computer, wherein a communication connection can be established between the device and the computer.

13. Method for producing a staircase step covering, comprising the steps:
measuring the surface dimensions of the staircase step by means of a device according to one of the claims 1 to 12;
transmitting the data for the surface measurement to a processing unit;
producing the staircase step covering in accordance with the transmitted data.

## Revendications

1. Dispositif servant à mesurer des dimensions surfaciques d'un objet (12), comprenant une pièce de matériau (2) flexible et allongée, montée de manière à pouvoir être déroulée sur un rouleau (1), au niveau de l'extrémité de laquelle est prévue une sonde (3), dans lequel sont prévus deux capteurs, par lesquels il est possible de détecter la longueur déroulée de la pièce de matériau (2) et l'angle de la pièce de matériau (2) par rapport à une base (5) du dispositif, et dans lequel la base (5) est constituée d'une plaque de base plate et le rouleau (1) est disposé sur le côté opposé à la surface d'appui (6) de la plaque de base, **caractérisé en ce que** le rouleau (1) est relié à la base (5) du dispositif de manière à pouvoir tourner autour d'un axe vertical (4'), qui est aussi bien perpendiculaire au plan de la base (5) du dispositif que perpendiculaire à l' axe de rotation (13) du rouleau (1), et **en ce que** le rouleau (1) est monté sur un bras de pivotement (10), par lequel l' axe (13) du rouleau (1) peut être déplacé de manière répétée en direction de la base (5).

2. Dispositif selon la revendication 1, **caractérisé en ce qu'**un moyen de précontrainte, de préférence un ressort, est prévu, à l'aide duquel une force servant à l'enroulement sur le rouleau (1) est exercée sur la pièce de matériau (2) flexible allongée.

3. Dispositif selon la revendication 1 ou 2, **caractérisé en ce que** la pièce de matériau (2) flexible allongée est un ruban de mesure.

4. Dispositif selon l'une quelconque des revendications 1 à 3, **caractérisé en ce que** la plaque de base (5) présente une arête de butée (7) servant à aligner le dispositif au niveau d'une arête d'objet.

5. Dispositif selon l'une quelconque des revendications 1 à 4, **caractérisé en ce que** la sonde (3) est réalisée sous la forme d'une pièce à main.

6. Dispositif selon l'une quelconque des revendications 1 à 5, **caractérisé en ce que** la sonde (3) présente une pointe (9).

7. Dispositif selon la revendication 6, **caractérisé en ce que** la pointe (9) de la sonde est réalisée sous la forme d'un rouleau palpeur (8) à roulements à billes, dont l'axe de rouleau (15) s'étend de manière parallèle par rapport à l'axe vertical (4') du dispositif.

8. Dispositif selon l'une quelconque des revendications 1 à 7, **caractérisé en ce que** l'axe vertical (4') s'étend à travers un bloc de support (4) relié de manière amovible, de préférence de manière magnétique, à la plaque de base (5).

9. Dispositif selon l'une quelconque des revendications 1 à 8, **caractérisé en ce qu'**au moins un des capteurs est un capteur magnétique.

10. Dispositif selon l'une quelconque des revendications 1 à 9, **caractérisé en ce que** le dispositif peut être commandé par une télécommande.

11. Dispositif selon l'une quelconque des revendications 1 à 10, **caractérisé en ce que** le dispositif présente un moyen émetteur, de préférence un moyen émetteur électronique, en particulier un émetteur Bluetooth, à l'aide duquel les valeurs de mesure peuvent être transmises à une unité de traitement.

12. Système servant à mesurer des dimensions surfaciques d'un objet, comprenant un dispositif selon l'une quelconque des revendications 1 à 11, et un ordinateur, dans lequel une liaison de communication peut être établie entre le dispositif et l'ordinateur.

13. Procédé servant à fabriquer un revêtement de marches, comprenant les étapes suivantes :
la mesure des dimensions surfaciques de la marche au moyen d'un dispositif selon l'une quelconque des revendications 1 à 12,
la transmission des données des dimensions surfaciques à une unité de traitement,
la confection du revêtement de marches selon les données transmises.
